# EUROPÄISCHE PATENTSCHRIFT

(11) **EP 2 718 998 B1**
(45) Veröffentlichungstag und Bekanntmachung des Hinweises auf die Patenterteilung: **01.03.2017**
(21) Anmeldenummer: 12725742.6
(22) Anmeldetag: 04.06.2012
(51) Int. Cl.: H01M 2/10, H01M 10/0525, H01M 10/058, H01M 2/02, H01M 2/04

(54) **GEHÄUSE FÜR EINE GALVANISCHE ZELLE**
HOUSING FOR A GALVANIC CELL
BOÎTIER POUR CELLULE GALVANIQUE

(30) Priorität: 09.06.2011 DE 102011077292
(43) Veröffentlichungstag der Anmeldung: 16.04.2014
(73) Patentinhaber: SAMSUNG SDI CO., LTD., Yongin-si, Gyeonggi-do 446-577 (KR); Robert Bosch GmbH, 70442 Stuttgart (DE)
(72) Erfinder: WOEHRLE, Thomas, 80807 Munich (DE); KOHLBERGER, Markus, 70174 Stuttgart (DE)
(74) Vertreter: Bee, Joachim
(86) Internationale Anmeldenummer: PCT/EP2012/060456
(87) Internationale Veröffentlichungsnummer: WO 2012/168163

(56) Entgegenhaltungen:
- EP-A1- 1 760 803
- WO-A2-2008/021230
- US-A1- 2006 216 588
- US-A1- 2010 316 906

## Beschreibung

Die vorliegende Erfindung betrifft ein Gehäuse für eine galvanische Zelle, insbesondere eine Lithiumionenzelle, oder für ein Batteriemodul aus mehreren galvanischen Zellen oder für ein Batteriepack von mehreren, galvanische Zellen umfassenden Batteriemodulen, ein Grundgehäuse für ein derartiges Gehäuse, eine Batterie mit einem derartigen Gehäuse oder Grundgehäuse sowie ein Verfahren zur Herstellung eines derartigen Gehäuses.

### Stand der Technik

Lithiumionenzellen besitzen mindestens eine Elektrode, die Lithiumionen (Li) reversibel ein- und wieder auslagern kann, was auch als Interkalation beziehungsweise Deinterkalation bezeichnet wird. Damit die Interkalation und Deinterkalation von Lithiumionen stattfindet kann ist die Anwesenheit einer Elektrolytkomponente notwendig. Derzeit wird bei den meisten Lithiumionenzellen Lithiumhexafluorophosphat (LiPF₆) eingesetzt. Lithiumhexafluorophosphat ist gegenüber Feuchtigkeit äußerst reaktiv, wobei es in mehreren Stufen bis hin zu Fluorwasserstoff (HF) hydrolysieren kann.

Um eine Reaktion mit Feuchtigkeit zu verhindern, werden derzeit Gehäuse mit einem metallischen Anteil für Lithiumionenzellen verwendet, bei denen die Metallfolie beziehungsweise das Metallblech als eigentliche Feuchtigkeitssperre dient.

Je nach Einsatzbereich werden Lithiumionenzellen entweder in weichen Verpackungen, welche auch als Softpackages, Pouch-Zellen oder Lithium-Polymer-Zellen bezeichnet werden, oder in starren Gehäusen, so genannten Hardcases, integriert.

Weiche Verpackungen können durch Tiefziehen von Metall-Kunststoff-Verbundwerkstoffen, insbesondere Aluminiumverbundfolien, hergestellte werden, welche eine metallische Lage mit einer Schichtdicke von weniger als 75 µm, in der Regel von weniger als 60 µm aufweisen.

Manche Einsatzbereiche, wie der Kraftfahrzeugbereich, erfordern jedoch starre Gehäuse mit einer stärkeren metallischen Gehäusewandung. Diese können nicht durch Tiefziehen von Metall-Kunststoff-Verbundwerkstoffen hergestellte werden, da bei einer größeren Schichtdicke der metallischen Lage die Kunststofflagen an den Kanten überstreckt werden und reißen können.

Metallische Zellgehäuse sind jedoch naturgemäß nach außen elektrisch leitend. Um eine elektrische Isolation von starren Gehäusen zu realisieren, wird üblicherweise ein sogenannter Schrumpfschlauch über die Seitenflächen des Gehäuses gezogen. Der Schrumpfschlauch haftet jedoch nicht flächig an den Seitenflächen des Gehäuses, was sich nachteilig auf die damit erzielbaren Isolationseigenschaften auswirken kann. Zudem wird der obere und untere Bereich des Gehäuses durch den Schrumpfschlauch nicht abgedeckt und muss durch weitere zusätzliche Prozessschritte mit einer elektrischen Isolation abgedeckt werden. Darüber hinaus ist beim Anbringen des Schrumpfschlauches ein gewisser Wärmeeintrag auf die Zelle nicht zu vermeiden.

US2006/216588 A1 offenbart ein über einen Deckel verschließbares Gehäuse für eine galvanische Zelle, wobei der Deckel von dem Gehäuse isoliert ist.

### Offenbarung der Erfindung

Gegenstand der vorliegenden Erfindung ist ein Gehäuse für eine galvanische Zelle, insbesondere Lithiumionenzelle, oder für ein Batteriemodul aus mehreren galvanischen Zellen oder für ein Batteriepack von mehreren, galvanische Zellen umfassenden Batteriemodulen, welches ein Grundgehäuse, einen Gehäusedeckel, mindestens eine elektrisch isolierende Isolationsschicht und mindestens einen elektrisch isolierenden Abdeckstreifen umfasst.

Im Rahmen der vorliegenden Erfindung dienen Begriffe wie Deckel, Seitenwand, Boden, Oberseite ausschließlich zur Beschreibung der Ausrichtung und Anordnung von Bauteilen zu einander. Die Begriffe sollen daher nicht dahingehend ausgelegt werden, die Ausrichtung der Bauteile bezüglich der Gravitationsrichtung einzuschränken.

Das Grundgehäuse weist insbesondere eine Öffnung zum Einbringen der einzuhausenden Einrichtung/en, beispielsweise Lithiumionenzelle/n, in das Grundgehäuse und mindestens eine die Öffnung begrenzende Seitenwand auf, und kann insbesondere metallisch, zum Beispiel aus Aluminium oder Weißblech, ausgeführt sein. Beispielsweise kann das Grundgehäuse einen Boden, eine oder mehrere Seitenwände und eine dem Boden gegenüberliegende, insbesondere mit einem Deckel verschließbare, Öffnung aufweisen.

Der Gehäusedeckel dient insbesondere zum Verschließen der Öffnung des Grundgehäuses, und kann insbesondere ebenfalls metallisch, zum Beispiel aus Aluminium oder Weißblech, ausgeführt sein. Mit anderen Worten, die Öffnung des Grundgehäuses ist insbesondere mit dem Gehäusedeckel verschlossen oder verschließbar.

Der Gehäusedeckel kann dabei insbesondere mit der Seitenwand beziehungsweise den Seitenwänden des Grundgehäuses verbunden oder verbindbar sein.

Die Isolationsschicht kann insbesondere mindestens eine der Außenflächen des Grundgehäuses und/oder des Gehäusedeckels bedecken.

Erfindungsgemäß ist zumindest der Verbindungsbereich zwischen Gehäusedeckel und Seitenwand beziehungsweise Seitenwänden durch den Abdeckstreifen abgedeckt oder abdeckbar.

Unter Abdecken kann im Sinn der vorliegenden Erfindung sowohl verstanden werden, dass der Abdeckstreifen das als abgedeckt bezeichnete Element, beispielsweise den Verbindungsbereich, direkt, das heißt kontaktierend, abdeckt als auch dass der Abdeckstreifen ein Element, beispielsweise die Isolationsschicht, abdeckt, welches wiederum das als abgedeckt bezeichnete Element, beispielsweise den Verbindungsbereich, abdeckt. Auch kann hierunter eine Kombination davon verstanden werden. Beispielsweise kann die Isolationsschicht den Verbindungsbereich, beispielsweise eine Schweißnaht, bis auf einige Stellen vollständig bedecken, wobei der Abdeckstreifen die von der Isolationsschicht nicht bedeckten Stellen des Verbindungsbereichs, beispielsweise der Schweißnaht, sowie die daran angrenzenden Abschnitte der Isolationsschicht bedeckt.

Durch eine Kombination von Isolationsschicht und Abdeckstreifen kann vorteilhafterweise eine deutlich bessere elektrische Isolation des Gehäuses nach Außen erzielt werden als mit einer Isolationsschicht alleine. Dies ist insbesondere insofern vorteilhaft, als dass der Gehäusedeckel mit dem Grundgehäuse durch eine Schweißnaht verbunden ist oder wird. Durch das Schweißen kann nämlich eine vor dem Schweißen aufgebrachte Isolationsschicht zerstört werden. Eine nach dem Schweißen aufgebrachte Isolationsschicht kann hingegen Störstellen im Bereich der Schweißnaht aufweisen. Durch den erfindungsgemäßen Abdeckstreifen kann vorteilhafterweise in beiden Fällen eine gute elektrische Isolierung des Gehäuses, auch im Verbindungsbereich, insbesondere im Bereich der Schweißnaht, erzielt werden. Insgesamt kann so vorteilhafterweise das Durchschlagen von Spannungen zwischen den einzelnen Zellen eines Batteriemoduls verhindert werden, was zu einer Beschädigung oder sogar zur Unbrauchbarkeit des Batteriemoduls führen kann.

Im Rahmen einer Ausführungsform ist der Gehäusedeckel mit der Seitenwand beziehungsweise den Seitenwänden des Grundgehäuses durch eine Schweißnaht verbindbar beziehungsweise verbunden.

Im Rahmen einer weiteren Ausführungsform deckt der Abdeckstreifen weiterhin einen an den Verbindungsbereich, insbesondere die Schweißnaht, angrenzenden Abschnitt des Gehäusedeckels und/oder einen an den Verbindungsbereich, insbesondere die Schweißnaht, angrenzenden Abschnitt des Grundgehäuses ab. Dabei kann der Abdeckstreifen die an den Verbindungsbereich, insbesondere die Schweißnaht, angrenzende Fläche des Gehäusedeckels vollständig abdecken. Auf diese Weise kann eine besonders gute elektrische Isolation des Gehäuses erzielt werden.

Im Rahmen einer weiteren Ausführungsform deckt der Abdeckstreifen weiterhin einen zum Verbindungsbereich, insbesondere zur Schweißnaht, benachbarten Abschnitt der Seitenwandisolationsschicht/en und/oder Gehäusedeckelisolationsschicht/en ab. Auf diese Weise kann die elektrische Isolation des Gehäuses noch weiter gesteigert werden.

Im Rahmen einer Ausgestaltung bedeckt die Isolationsschicht die Außenfläche des Grundgehäuses und die Außenflächen des Gehäusedeckels vollflächig oder im Wesentlichen vollflächig. Insbesondere kann die Isolationsschicht die Außenfläche der Seitenwand beziehungsweise die Außenflächen der Seitenwände und/oder die Außenfläche des Bodens und/oder die Außenflächen des Gehäusedeckels vollflächig oder im Wesentlichen vollflächig bedecken. Dabei kann unter im Wesentlichen vollflächig verstanden werden, dass die Isolationsschicht im Verbindungsbereich, insbesondere im Bereich der Schweißnaht, Störstellen aufweisen kann. Diese Ausgestaltung kann insbesondere dadurch erzielt werden, dass die Isolationsschicht nach dem Verbinden des Grundgehäuses mit dem Gehäusedeckel aufgebracht wird.

Im Rahmen einer anderen Ausgestaltung bedeck ein Abschnitt der Isolationsschicht die Außenflächen des Grundgehäuses mit Ausnahme eines zur Öffnung benachbarten Randstreifens flächig. Insbesondere kann ein Abschnitt der Isolationsschicht die Außenfläche der Seitenwand beziehungsweise die Außenflächen der Seitenwände mit Ausnahme eines zur Öffnung benachbarten Randstreifens flächig und/oder die Außenfläche des Bodens vollflächig bedecken. Diese Ausgestaltung kann insbesondere dadurch erzielt werden, dass die Isolationsschicht vor dem Einbringen der galvanischen Zelle aufgebracht wird. Diese Ausgestaltung hat sich insbesondere für Isolationsschichten als vorteilhaft erwiesen, deren Ausbildung einen hohen Wärmeeintrag benötigen, bei welchem die galvanische Zelle ansonsten geschädigt werden könnte. Aufgrund des unbeschichteten Randstreifens kann das Grundgehäuse im Rahmen dieser Ausgestaltung zudem besser mit dem Gehäusedeckel verschweißt werden. Im Rahmen dieser Ausgestaltung können die Außenflächen des Gehäusedeckels mit Ausnahme eines im geschlossenen Zustand zur Öffnung des Grundgehäuses benachbarten Randstreifens mit einem anderen Abschnitt der Isolationsschicht flächig bedeckt sein. Auch das Aufbringen des Abschnitts der Isolationsschicht auf dem Gehäusedeckel kann hierbei vor dem Bestücken des Gehäuses mit der galvanischen Zelle erfolgen, was ebenfalls mit dem Vorteil einhergeht, dass ein hoher Wärmeeintrag auf die galvanische Zelle vermieden werden kann. Der unbeschichtete Randstreifen des Gehäusedeckels trägt ebenfalls zu einer Verbesserung des Schweißens bei.

Die Fläche des unbeschichteten Randstreifens kann zum Beispiel ≥ 1 % bis ≤ 20 %, beispielsweise ≥ 2 % bis ≤ 15 %, der Gesamtfläche der jeweiligen Seitenwand des Gehäusegrundkörpers beziehungsweise des Gehäusedeckels ausmachen.

Im Rahmen einer Ausführungsform weist der Randstreifen, insbesondere des Gehäusegrundkörpers, gemessen zwischen der zur Öffnung benachbarten Kante und der Isolationsschicht, eine Breite (b) von ≥ 0,1 mm bits ≥ 20 mm, insbesondere von ≥ 1 mm bis ≤ 10 mm, beispielsweise von ≥ 2 mm bis ≥ 7 mm, auf. Zum Beispiel kann der unbeschichtete Randstreichen eine Breite von etwa 5 mm aufweisen.

Im Rahmen einer weiteren Ausführungsform ist die Außenfläche der Seitenwand beziehungsweise sind die Außenflächen der Seitenwände mit Abschnitt/en der Isolationsschicht bedeckt. Insbesondere kann der die Seitenwand bedeckende Abschnitt beziehungsweise können die die Seitenwände bedeckenden Abschnitte der Isolationsschicht dabei stoffschlüssig mit dem den Boden bedeckenden Abschnitt der Isolationsschicht ausgebildet beziehungsweise verbunden sein.

Im Rahmen einer weiteren Ausführungsform ist der Abdeckstreifen ein Klebeband oder Schrumpfschlauch oder eine Lackschicht, insbesondere aus einem bei Raumtemperatur aushärtenden Lack. Diese können vorteilhafterweise einfach angebracht werden. Vorzugsweise ist der Abdeckstreifen ein Klebeband. Ein Klebeband hat bezüglich eines Schrumpfschlauches unter anderem den Vorteil, dass dieses ohne zusätzlichen Wärmeeintrag angebracht werden kann. Ein Klebeband hat bezüglich einer Lackschicht den Vorteil, dass hierdurch eine bessere elektrische Isolation sicher gestellt werden kann, da lochartige Störstellen in Klebebändern in der Regel nicht auftreten.

Die Isolationsschicht kann beispielsweise eine durchschnittliche Schichtdicke in einem Bereich von ≥ 10 µm bis ≤ 5 mm, beispielsweise von ≥ 10 µm bis ≤ 1500 µm, zum Beispiel von ≥ 10 µm bis ≤ 200 µm, aufweisen.

Im Rahmen einer weiteren Ausführungsform ist die mindestens eine Isolationsschicht aus einem elastomeren Material ausgebildet. Insbesondere kann die mindestens eine Isolationsschicht aus einem Material auf Polyolefin-, Silikon-, Polyurethan-, Polyester-, Polyesterurethan-, Epoxid-, Acrylat-, Polyimid- oder Ethylen-Propylen-Dien-Kautschuk-Basis ausgebildet sein. Diese Materialien haben sich zur Ausbildung der Isolationsschicht, insbesondere aufgrund ihrer Stoß-und Kratzfestigkeit, als vorteilhaft erwiesen.

Im Rahmen einer weiteren Ausführungsform umfasst das Isolationsschichtmaterial und/oder das Abdeckstreifenmaterial mindestens ein Additiv zur Erhöhung der Wärmeleitfähigkeit. Beispielsweise kann das Isolationsschichtmaterial und/oder das Abdeckstreifenmaterial mindestens ein anorganisches, insbesondere keramisches, Additiv zur Erhöhung der Wärmeleitfähigkeit umfassen. Zum Beispiel sind hierfür Additive geeignet welche für Wärmeleitkleber und Wärmeleitfolien eingesetzt werden. So kann ein gutes Abführen der beim Betrieb der galvanischen Zelle entstehenden Wärme erzielt werden.

Insofern die Isolationsschicht beziehungsweise der Abdeckstreifen sehr dünn ausgestaltet ist, kann jedoch auch ohne den Zusatz eines Wärmeleitungsadditivs eine gute Wärmeableitung erzielt werden.

Die Isolationsschicht kann beispielsweise durch ein Tauch-, Sprüh-, Pulverbeschichtungs- oder Kaschierungsverfahren aufgebracht werden.

Im Rahmen einer weiteren Ausführungsform ist die Isolationsschicht durch ein Tauch-, Sprüh- oder Pulverbeschichtungsverfahren, insbesondere durch ein Tauchverfahren, aufgebracht.

Bei dem erfindungsgemäßen Gehäuse kann es sich beispielsweise um ein prismatisches oder ein zylindrisches Gehäuse handeln. Daneben sind jedoch auch andere dreidimensionale Hohlkörperformen, beispielsweise ein pyramidenförmiger Hohlkörper, denkbar. Das erfindungsgemäße Gehäuse kann ein starres Gehäuse sein und insbesondere Wandstärken von ≥ 100 µm aufweisen, was auch als so genanntes Hardcase-Gehäuse bezeichnet werden kann.

Hinsichtlich weiterer Vorteile und Merkmale des erfindungsgemäßen Gehäuses wird hiermit explizit auf die Erläuterungen im Zusammenhang mit dem erfindungsgemäßen Grundgehäuse, der erfindungsgemäßen Batterie, dem erfindungsgemäßen Verfahren, den Figuren und der Figurenbeschreibung verwiesen.

Ein weiterer Gegenstand der vorliegenden Erfindung ist ein, insbesondere metallisches, Grundgehäuse für eine galvanische Zelle, insbesondere Lithiumionenzelle, oder für ein Batteriemodul aus mehreren, galvanischen Zellen oder für eine Batteriepack von mehreren, galvanische Zellen umfassenden Batteriemodulen, vorzugsweise für eine galvanische Zelle, insbesondere für ein erfindungsgemäßes Gehäuse

Erfindungsgemäß weist das Grundgehäuse eine, insbesondere durch einen Deckel verschließbare, Öffnung zum Einbringen der einzuhausenden Einrichtung/en, beispielsweise Lithiumionenzelle/n, in das Grundgehäuse und mindestens eine die Öffnung begrenzende Seitenwand auf, wobei die Außenflächen des Grundgehäuses mit Ausnahme eines zur Öffnung benachbarten Randstreifens flächig mit mindestens einer Isolationsschicht bedeckt sind. Insbesondere kann das Grundgehäuse einen Boden, mindestens eine Seitenwand und eine gegenüberliegend zum Boden angeordnete, insbesondere durch einen Gehäusedeckel verschließbare, Öffnung aufweisen, wobei die Außenfläche der Seitenwand beziehungsweise die Außenflächen der Seitenwände mit Ausnahme eines zur Öffnung benachbarten Randstreifens mit mindestens einer Isolationsschicht bedeckt sind.

Hinsichtlich weiterer Vorteile und Merkmale des erfindungsgemäßen Grundgehäuses wird hiermit explizit auf die Erläuterungen im Zusammenhang mit dem erfindungsgemäßen Gehäuse, der erfindungsgemäßen Batterie, dem erfindungsgemäßen Verfahren, den Figuren und der Figurenbeschreibung verwiesen.

Ein weiterer Gegenstand der vorliegenden Erfindung ist eine galvanische Zelle, beispielsweise eine Lithiumionenzelle, oder ein Batteriemodul aus mehreren galvanischen Zellen, beispielsweise ein Lithiumionenzellenbatteriemodul, oder ein Batteriepack von mehreren, galvanische Zellen umfassenden Batteriemodulen, insbesondere eine Lithiumionenzellenbatteriepack, welche ein erfindungsgemäßes Gehäuse oder Grundgehäuse umfasst.

Hinsichtlich weiterer Vorteile und Merkmale der erfindungsgemäßen Batterie wird hiermit explizit auf die Erläuterungen im Zusammenhang mit dem erfindungsgemäßen Gehäuse und Grundgehäuse, dem erfindungsgemäßen Verfahren, den Figuren und der Figurenbeschreibung verwiesen.

Ein weiterer Gegenstand der vorliegenden Erfindung ist ein Verfahren zur Herstellung eines erfindungsgemäßen Gehäuses beziehungsweise einer erfindungsgemäßen galvanische Zelle, eines erfindungsgemäßen Batteriemoduls oder eines erfindungsgemäßen Batteriepacks, vorzugsweise einer erfindungsgemäßen galvanischen Zelle, umfassend die Verfahrensschritte:
a) Bereitstellen eines, insbesondere metallischen, Grundgehäuses mit einer Öffnung zum Einbringen der einzuhausenden Einrichtung/en, beispielsweise Lithiumionenzelle/n, in das Grundgehäuse und mit mindestens einer die Öffnung begrenzenden Seitenwand, und
b) Einbringen der einzuhausenden Einrichtung/en in das Grundgehäuse,
c) Verschließen der Öffnung des Grundgehäuses mit einem, insbesondere metallischen, Gehäusedeckel,
d) Verbinden, insbesondere Verschweißen, des Gehäusedeckels mit der Seitenwand beziehungsweise den Seitenwänden des Grundgehäuses, und
e) Aufbringen mindestens eines elektrisch isolierenden Abdeckstreifens derart, das zumindest der Verbindungsbereich zwischen Gehäusedeckel und Seitenwand beziehungsweise Seitenwänden, insbesondere Schweißnaht, aus Verfahrensschritt d) durch den Abdeckstreifen abgedeckt wird,
wobei das Verfahren zwischen den Verfahrensschritten a) und d), insbesondere a) und b), oder zwischen den Verfahrensschritten d) und e) weiterhin den Verfahrensschritt:
i) Aufbringen mindestens einer elektrisch isolierenden Isolationsschicht auf mindestens eine der Außenflächen des Grundgehäuses und/oder des Gehäusedeckels,
umfasst.

Im Rahmen der Ausgestaltung in der das Aufbringen der Isolationsschicht zwischen den Verfahrensschritten a) und d), insbesondere a) und b), erfolgt, wird die Isolationsschicht in Verfahrensschritt i) vorzugsweise derart auf die Außenfläche/n des Grundgehäuses aufgebracht, dass ein zur Öffnung benachbarter Randstreifen der Außenfläche der Seitenwand beziehungsweise der Außenflächen der Seitenwände nicht mit der Isolationsschicht bedeckt wird. Dies hat den Vorteil, dass das Grundgehäuse im späteren Verfahrensschritt d) besser mit einem Gehäusedeckel verbunden, insbesondere verschweißt, werden kann. Dieser unbeschichtete Bereich kann später in Verfahrensschritt e) mit Hilfe des Abdeckstreifens isoliert werden.

Das Aufbringen der Isolationsschicht kann in Verfahrensschritt i) beispielsweise derart erfolgen, dass das Grundgehäuse und/oder der Gehäusedeckel oder der bereits geschlossene Verbund aus Grundgehäuse und Gehäusedeckel in eine Beschichtungsflüssigkeit getaucht wird, aus der sich eine, beispielsweise polymere, Isolationsschicht bilden kann. Die Flüssigkeit kann dabei mit einem Additiv zur Erhöhung der Wärmeleitfähigkeit, beispielsweise mit einer Keramik, wie Bornitrid und/oder Aluminiumoxid, gefüllt sein. Derartige feste Füllstoffe werden üblicherweise auch bei Wärmeleitfolien und -klebern eingesetzt. Vorzugsweise härtet diese Flüssigkeit bei Raumtemperatur oder bis maximal 40 °C aus. So kann vermieden werden, dass bereits formierte, das heißt geladene, Zellen thermisch geschädigt werden. Zur Stabilisierung kann zuvor ein Glasfaservlies auf den zu beschichtenden Außenflächen angebracht werden. Auf diese Weise können Isolationsschichten mit einer durchschnittlichen Schichtdicke in einem Bereich von etwa ≥ 100 µm bis ≤ 1500 µm aufgebracht werden

Hierfür eignen sich beispielsweise Beschichtungsflüssigkeiten auf Silikon- oder Polyurethan-Basis. Beispielsweise sind Silikonelastomermassen, wie sogenannter RTV-2 Silikonkautschuk, welcher durch eine Kondensationsreaktion vernetzt wird, hierfür geeignet. Die Kondensationsvernetzung kann dabei durch Umsetzung von Polydimethylsiloxanen mit Kieselsäureestern (Vernetzer) unter Zuhilfenahme von Zinn-Katalysatoren erfolgen. Diese können einen oder mehrere Füllstoffe, beispielsweise Aluminiumoxid, umfassen.

Die Beschichtungsflüssigkeit kann beispielsweise in einer Form vorgelegt werden, welche ein oder mehr Vertiefungen aufweist, welche der Form und der Größe des einzutauchenden Grundgehäuses beziehungsweise Gehäusedeckels beziehungsweise Gehäuseverbundes zuzüglich einer gewünschten Beschichtungsdicke entspricht. Die Form kann beispielsweise aus Teflon ausgebildet oder mit Teflon beschichtet sein. Eine derartige Form kann gegebenenfalls mit einem Überschuss, Beschichtungsflüssigkeit gefüllt werden. Die Tropfzeit der Beschichtungsflüssigkeit wird vorzugsweise derart gewählt, dass alle Freiräume der Beschichtungsform rechtzeitig gefüllt werden können. Eine oder mehrere Grundgehäuse beziehungsweise Gehäusedeckel beziehungsweise Gehäuseverbünde, die an einem Kunststoffträger befestigt sind, welcher die Terminals und die Berstmembran abdeckt, können in die in der Form vorgelegten Beschichtungsflüssigkeit gedrückt werden. Nach dem Aushärten können die Grundgehäuse beziehungsweise Gehäusedeckel beziehungsweise Gehäuseverbünde aus der Form entnommen werden. Auf diese Weise kann sehr einfach erzielt werden, dass die Außenflächen der Grundgehäuse beziehungsweise Gehäusedeckel beziehungsweise Gehäuseverbünde zumindest teilweise mit einer umlaufenden und gleichmäßigen Isolationsschicht bedeckt werden. Auch der unbeschichtete Randstreifen lässt sich so auf einfache Weise erzielen.

Weitere Möglichkeiten zum Aufbringen der Isolationsschicht in Verfahrensschritt f) stellen die Pulverlackbeschichtungsverfahren und KTL-Verfahren (kathodische Tauchlackierung) dar. Bei diesen Verfahren wird eine aufgebrachte Schicht in einem Ofen ausgehärtet. Mittels dieser Verfahren lassen sich Isolationsschichten mit einer geringen durchschnittlichen Schichtdicke, beispielsweise im Fall von Pulverlacken von ≥ 50 µm bits ≤ 200 µm oder im Fall von KTL-Lacken von ≥ 10 µm bis ≤ 80 µm, herstellen, welche selbst bei diesen geringen Schichtdicken eine Isolierung bis mindestens 2500 V DC sicherstellen können. Zudem weisen derartig dünne Isolationsschichten den Vorteil auf, dass diese nicht extra mit Wärmeleitfähigkeitsadditiven gefüllt werden müssen. Da bei diesen Verfahren die Aushärtung jedoch bei hohen Temperaturen abläuft, bei welchen die galvanische Zelle irreversibel geschädigt werden könnte, sollte hierbei erst nach dem Aufbringen der Isolationsschicht mit der galvanischen Zelle bestückt werden.

Eine weitere Alternative stellt das Umspritzen des Grundgehäuses dar. Basispolymere können hier Ethylen-Propylen-Dien-Kautschuk (EPDM) und Polyurethane (PU) und/oder Polyolefine sein. Hierbei sind die Schichtdicken jedoch deutlich stärker (mindestens 1 mm).

Wie bereits erläutert benötigen manche Beschichtungsmaterialien und -verfahren eine Aushärtung bei einer Temperatur, bei welcher die galvanische Zelle irreversibel geschädigt werden könnte. Bei Verwendung solcher Beschichtungsmaterialien und -Verfahren, wird vorzugsweise vor dem Bestücken mit der galvanischen Zelle beschichtet.

Insbesondere kann der Abdeckstreifen in Verfahrensschritt e) derart aufgebracht werden, dass weiterhin ein an den Verbindungsbereich, insbesondere die Schweißnaht, angrenzender Abschnitt des Gehäusedeckels und/oder ein an den Verbindungsbereich, insbesondere die Schweißnaht, angrenzender Abschnitt des Grundgehäuses durch den Abdeckstreifen abgedeckt wird. Dabei kann die an den Verbindungsbereich, insbesondere die Schweißnaht, angrenzende Fläche des Gehäusedeckels vollständig durch den Abdeckstreifen abgedeckt werden. Alternativ oder zusätzlich dazu kann der Abdeckstreifen in Verfahrensschritt e) derart aufgebracht werden, dass weiterhin ein zum Verbindungsbereich, insbesondere zur Schweißnaht, benachbarter Abschnitt der Seitenwandisolationsschicht/en und/oder Gehäusedeckelisolationsschicht/en durch den Abdeckstreifen abgedeckt wird. Mit anderen Worten, der Abdeckstreifen kann mit der oder den Isolationsschichten beziehungsweise Isolationsschichtabschnitten teilweise überlappen. Die Überlappung von Abdeckstreifen und Isolationsschicht wird vorzugsweise derart gewählt, dass die Mindestanforderungen an Kriechstrecken für die elektrische Isolation eingehalten werden.

Der Abdeckstreifen kann insbesondere ein Klebeband, ein Schrumpfschlauch oder eine streifenförmige Lackbeschichtung, insbesondere aus einem bei Raumtemperatur aushärtenden Lack, sein.

Das Klebeband kann beispielsweise eine Basisschicht aus einem Polymer umfassen, welches ausgewählt ist, aus der Gruppe bestehend aus Polyestern, beispielsweise Polyethylenterephthalat (PET) und/oder Polyethylennaphthalat (PEN), Polyimiden (PI), Silikonen, Polyolefinen, beispielsweise Polypropylen (PP), Polyhalogenolefinen, beispielsweise Polyvinylchlorid (PVC), Polystyrolen (PS) und Kombinationen davon. Die Klebeschicht des Klebebandes kann beispielsweise aus einem Klebstoff ausgebildet sein, welcher ausgewählt ist aus der Gruppe bestehend aus polysiloxanbasierten Klebstoffen, acrylatbasiereten Klebstoffen, kautschukbasierten Klebstoffen, polyurethanbasierten Klebstoffen, epoxidharzbasierten Klebstoffen und Kombinationen davon.

Geeignete Schrumpfschläuche können beispielsweise auf Polyestern, wie Polyethylenterephthalat (PET), oder auf Basis von Polyhalogenolefinen, beispielsweise Polyvinylchlorid (PVC), basieren.

Vorzugsweise ist der Abdeckstreifen jedoch ein Klebeband oder ein streifenförmige Beschichtung aus einem bei Raumtemperatur aushärtenden Lack, beispielsweise auf Epoxidbasis, zum Beispiel ein Zweikomponenten-Epoxidlack, und/oder aus einem durch UV- und/oder IR-Strahlung aushärtenden Lack, beispielsweise auf Acrylat-Basis. Besonders bevorzugt ist der Abdeckstreifen ein Klebeband.

Hinsichtlich weiterer Vorteile und Merkmale des erfindungsgemäßen Verfahrens wird hiermit explizit auf die Erläuterungen im Zusammenhang mit dem erfindungsgemäßen Gehäuse und Grundgehäuse, der erfindungsgemäßen Batterie, den Figuren und der Figurenbeschreibung verwiesen.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: eine schematische perspektivische Ansicht einer Ausführungsform eines Grundgehäuses für ein erfindungsgemäßes Gehäuses;
- Fig. 2a: eine schematische Draufsicht auf die Seitenwand eines in Fig. 1 gezeigten Grundgehäuses nach dem Bestücken mit einer galvanischen Zelle und dem Verschweißen mit einem Gehäusedeckel;
- Fig. 2b: eine schematische Draufsicht des in Fig. 2a gezeigten Gehäuses nach dem Aufbringen einer Isolationsschicht;
- Fig. 2c: eine schematische Draufsicht auf die Seitenwand eines in Fig. 1 gezeigten Grundgehäuses nach dem Aufbringen einer Isolationsschicht mit einem ausgesparten Randstreifen;
- Fig. 2d: eine schematische Draufsicht des in Fig. 2c gezeigten Gehäuses nach dem Bestücken mit einer galvanischen Zelle und dem Verschweißen mit einem Gehäusedeckel;
- Fig. 3: eine schematische Draufsicht des in Fig. 2b oder 2d gezeigten Gehäuses nach dem Aufbringen eines Abdeckstreifens.

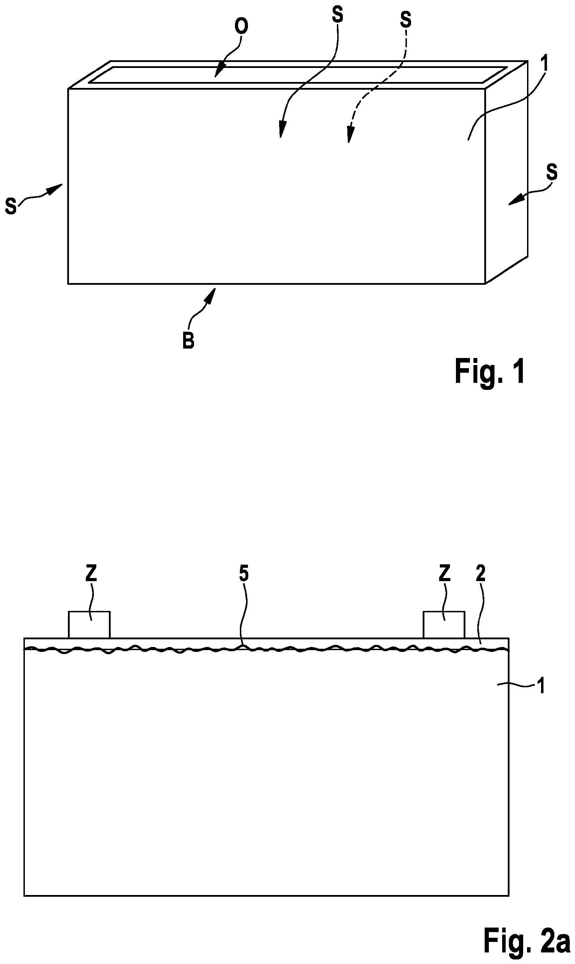

Figur 1 veranschaulicht ein metallisches Grundgehäuse 1 für eine prismatische Zelle, welches einem Boden B, vier Seitenwände S und eine gegenüberliegend zum Boden B angeordneten, durch einen Gehäusedeckel verschließbaren Öffnung O aufweist. Ein derartiges Grundgehäuse kann in Verfahrensschritt a) des erfindungsgemäßen Verfahrens bereitgestellt werden.

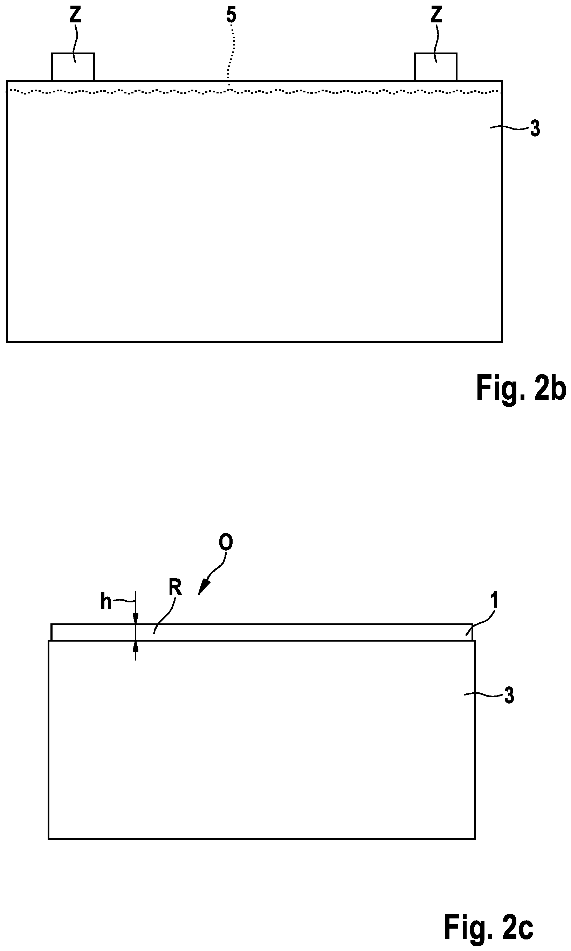

Die Figuren 2a und 2b veranschaulichen eine erste Ausgestaltung des erfindungsgemäßen Verfahrens.

Figur 2a zeigt ein in Figur 1 gezeigtes Grundgehäuse 1 nach Verfahrensschritt d) und vor den Verfahrensschritten f) und i) gemäß einer Ausgestaltung des erfindungsgemäßen Verfahrens. Figur 2a zeigt, dass in das in Figur 1 gezeigte Grundgehäuse 1 in Verfahrensschritt b) eine galvanische Zelle Z eingebracht wurde, in Verfahrensschritt c) die Öffnung des Grundgehäuses 1 mit einem Gehäusedeckel 2 verschlossen wurde und in Verfahrensschritt d) der Gehäusedeckel 2 mit den Seitenwänden S des Grundgehäuses 1, insbesondere durch eine Schweißnaht 5, verbunden wurde.

Figur 2b zeigt, dass auf das in Figur 2a gezeigte Gehäuse im Rahmen dieser Ausgestaltung des erfindungsgemäßen Verfahrens nach dem Verfahrensschritt d) in Verfahrensschritt i) auf die Außenflächen des Grundgehäuses 1 und des Gehäusedeckels 2 eine elektrisch isolierenden Isolationsschicht 3 aufgebracht wurde, welche die Außenflächen der Seitenwände S, des Bodens B und des Gehäusedeckels 2 zumindest im Wesentlichen vollflächig bedeckt. Eine derartige Isolationsschichtbeschichtung 3 kann beispielsweise durch Tauchen in eine Beschichtungsflüssigkeit erzielt werden. So kann insbesondere erzielt werden, dass die die Seitenwände S bedeckenden Isolationsschichtabschnitte 3 stoffschlüssig mit dem den Boden B bedeckenden Isolationsschichtabschnitt 3 und den Gehäusedeckel 2 bedeckenden Isolationsschichtabschnitten 3 verbunden sind. Die gestrichelte, mit dem Bezugszeichen 5 gekennzeichnete Linie, veranschaulicht, dass die Isolationsschicht 3 im Verbindungsbereich 5, insbesondere im Bereich der Schweißnaht, Störstellen aufweisen kann.

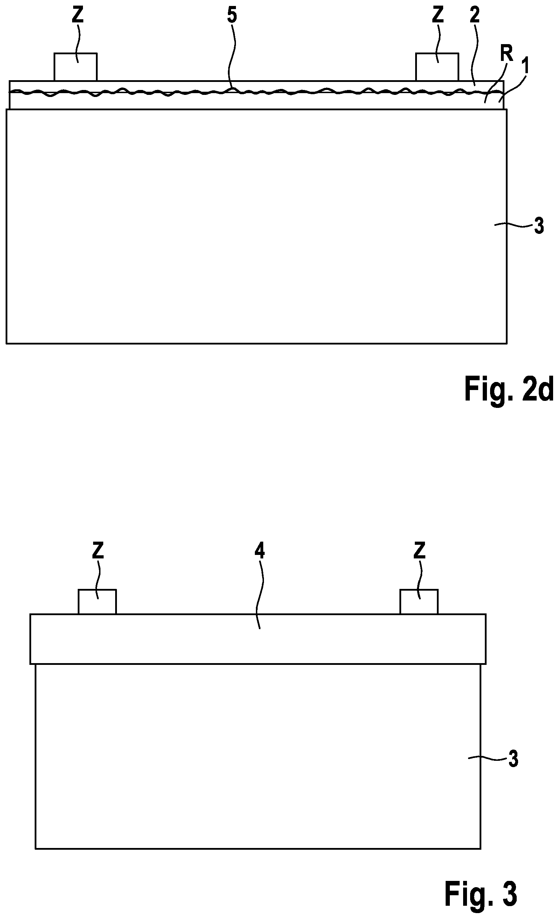

Die Figuren 2c und 2d veranschaulichen eine zweite Ausgestaltung des erfindungsgemäßen Verfahrens.

Figur 2c zeigt, dass in Verfahrensschritt a) ein in Figur 1 gezeigtes Grundgehäuse 1 bereitgestellt wurde und in einem nach Verfahrensschritt a) erfolgenden Verfahrensschritt i) auf die Außenflächen der Seitenflächen S und der Bodenfläche B des Grundgehäuses 1 derart eine Isolationsschicht 3 flächig aufgebracht wurde, dass ein zur Öffnung O benachbarter Randstreifen R der Außenflächen der Seitenwände S nicht mit der Isolationsschicht 3 bedeckt wurde. Eine derartige Isolationsschichtbeschichtung 3 kann ebenfalls beispielsweise durch Tauchen des Grundgehäuses 1 in eine Beschichtungsflüssigkeit erzielt werden. So kann insbesondere erzielt werden, dass die die Seitenwände S bedeckenden Isolationsschichtabschnitte 3 stoffschlüssig mit dem den Boden B bedeckenden Isolationsschichtabschnitt 3 verbunden sind.

Die Fläche des unbeschichteten Randstreifens R kann beispielsweise ≥ 1 % bis ≤ 20 %, der Gesamtfläche der jeweiligen Seitenwand S des Grundgehäuses 1 ausmachen. Gemessen zwischen der zur Öffnung O benachbarten Kante und der Isolationsschicht 3 kann der Randstreifen R zum Beispiel eine Breite b in einem Bereich von ≥ 1 mm bis ≤ 20 mm aufweisen.

Figur 2c zeigt, dass nach dem Verfahrensschritt i) in Verfahrensschritt b) eine galvanischer Zellen Z in das beschichtete Grundgehäuse 1 eingebracht wurde, in Verfahrensschritt c) die Öffnung O des Grundgehäuses 1 mit einem Gehäusedeckel 2 verschlossen wurde, dessen Oberseite mit einer Isolationsschicht 3 bedeckt ist, und in Verfahrensschritt d) der Gehäusedeckel 2 mit den Seitenwänden S des Grundgehäuses 1, insbesondere durch eine Schweißnaht 5, verbunden wurde.

Die Figuren 2a, 2b und 2d veranschaulichen zudem, dass in dem Gehäusedeckel 2 zwei beispielsweise als Aussparungen ausgestaltete Kontaktierungsbereiche vorgesehen sind, durch welche die Kontakte der galvanischen Zelle Z von außen auch im geschlossenen Zustand des Gehäuses zugänglich sind.

Figur 3 illustriert ein erfindungsgemäßes Gehäuse, welches sowohl aus der in Figur 2b gezeigten, nach der ersten Ausgestaltung des erfindungsgemäßen Verfahrens hergestellten Gehäusevorstufe als auch aus der in Figur 2d gezeigten, nach der zweiten Ausgestaltung des erfindungsgemäßen Verfahrens hergestellte Gehäusevorstufen resultieren kann, nach Aufbringen eines elektrisch isolierenden Abdeckstreifens 4, beispielsweise eines Klebebandes, in Verfahrensschritt e). Figur 3 veranschaulicht, dass der Abdeckstreifen 4 derart aufgebracht wurde, dass zumindest der Verbindungsbereich, insbesondere die Schweißnaht, 5 zwischen Gehäusedeckel 2 und Seitenwänden S, aus Verfahrensschritt d) durch den Abdeckstreifen 4 abgedeckt wird. Insbesondere zeigt Figur 3, dass der Abdeckstreifen in Verfahrensschritt e) derart aufgebracht wurde, dass zusätzlich zu dem Verbindungsbereich, insbesondere der Schweißnaht, 5 - ausgehend von der Gehäusevorstufe aus Figur 2b - zum Verbindungsbereich 5 benachbarte Abschnitte der Isolationsschicht 3 beziehungsweise - ausgehend von der Gehäusevorstufe aus Figur 2d - ein an den Verbindungsbereich 5 angrenzender Abschnitt des Gehäusedeckels 2 und ein an den Verbindungsbereich 5 angrenzender Abschnitt des Grundgehäuses 1 durch den Abdeckstreifen 4 sowie dazu benachbarte Isolationsschichtabschnitte 3 abgedeckt wurden.

## Patentansprüche

1. Gehäuse für eine galvanische Zelle (Z), insbesondere Lithiumionenzelle, oder für ein Batteriemodul aus mehreren galvanischen Zellen (Z) oder für ein Batteriepack von mehreren, galvanische Zellen (Z) umfassenden Batteriemodulen, umfassend
- ein Grundgehäuse (1) mit einer Öffnung (0) zum Einbringen der einzuhausenden Einrichtung/en, beispielsweise Lithiumionenzelle, in das Grundgehäuse (1) und mit mindestens einer die Öffnung (0) begrenzenden Seitenwand (S),
- einen Gehäusedeckel (2),
- mindestens eine elektrisch isolierende Isolationsschicht (3), und
- mindestens einen elektrisch isolierenden Abdeckstreifen (4),
wobei die Öffnung (0) des Grundgehäuses (1) mit dem Gehäusedeckel (2) verschlossen ist,
wobei der Gehäusedeckel (2) mit der Seitenwand (S) beziehungsweise den Seitenwänden (S) des Grundgehäuses (1) verbunden ist, wobei die Isolationsschicht (3) mindestens eine der Außenflächen (S,B) des Grundgehäuses (1) und/oder des Gehäusedeckels (2) bedeckt,
wobei zumindest der Verbindungsbereich (5) zwischen Gehäusedeckel (2) und Seitenwand beziehungsweise Seitenwänden (S) durch den Abdeckstreifen (4) abgedeckt ist, wobei der Gehäusedeckel (2) mit der Seitenwand (S) beziehungsweise den Seitenwänden (S) des Grundgehäuses (1) durch eine Schweißnaht (5) verbunden ist und wobei der elektrisch isolierende Abdeckstreifen (4) die Schweißnaht (5) sowie die daran angrenzenden Abschnitte der Isolationsschicht (3) bedeckt..

2. Gehäuse nach Anspruch 1 wobei der Abdeckstreifen (4) weiterhin einen an den Verbindungsbereich, insbesondere die Schweißnaht, (5) angrenzenden Abschnitt des Gehäusedeckels (2) und einen an den Verbindungsbereich, insbesondere die Schweißnaht, (5) angrenzenden Abschnitt des Grundgehäuses (1) abdeckt.

3. Gehäuse nach einem der Ansprüche 1 bis 2, wobei der Abdeckstreifen (4) weiterhin einen zum Verbindungsbereich, insbesondere zur Schweißnaht, (5) benachbarten Abschnitt der Seitenwandisolationsschichtlen und/oder 5Gehäusedeckelisolationsschichtlen (3) abdeckt.

4. Gehäuse nach einem der Ansprüche 1 bis 3, wobei
die Isolationsschicht (3) die Außenfläche des Grundgehäuses (1) und die Außenflächen des Gehäusedeckels (2) vollflächig oder im Wesentlichen vollflächig bedeckt, oder
ein Abschnitt der Isolationsschicht (3) die Außenflächen des Grundgehäuses (1) mit Ausnahme eines zur Öffnung (0) benachbarten Randstreifens (R) flächig bedeckt, wobei ein anderer Abschnitt der Isolationsschicht (3) die Außenflächen des Gehäusedeckels (2) mit Ausnahme eines im geschlossenen Zustand zur Öffnung (0) des Grundgehäuses (1) benachbarten Randstreifens flächig bedeckt

5. Gehäuse nach Anspruch 4, wobei der Randstreifen (R),gemessen zwischen der zur Öffnung (0) benachbarten Kante und der Isolationsschicht (3), eine Breite (b) von ≥ 0,1 mm bis ≤ 20 mm, insbesondere von ≥ 1 mm bis ≤ 10 mm, beispielsweise von ≥ 2 mm bis ≤ 7 mm, aufweist.

6. Gehäuse nach einem der Ansprüche 1 bis 5, wobei das Grundgehäuse einen Boden (B), mindestens eine Seitenwand (S) und eine gegenüberliegend zum Boden (B) angeordnete Öffnung (0) aufweist, insbesondere wobei die Außenfläche der Seitenwand (S) beziehungsweise die Außenflächen der Seitenwände (S) mit Abschnitten der Isolationsschicht (3) bedeckt sind, ins-besondere wobei der die Seitenwand (S) bedeckende Abschnitt beziehungsweise die die Seitenwände (S) bedeckenden Abschnitte der Isolati-onsschicht (3) stoffschlüssig mit dem den Boden (B) bedeckenden Abschnitt der Isolationsschicht (3) verbunden sind.

7. Gehäuse nach einem der Ansprüche 1 bis 6, wobei der Abdeckstreifen ein Klebeband oder Schrumpfschlauch oder eine Lackschicht, insbesondere ein Klebeband, ist.

8. Gehäuse nach einem der Ansprüche 1 bis 7, wobei die mindestens eine Isolationsschicht (3) aus einem elastomeren Material, insbesondere einem Material auf Silikon-, Polyurethan-, Polyester-, Polyesterurethan-, Epoxid-, Acrylat- oder Ethylen-Propylen-Dien-Kautschuk-Basis ausgebildet ist.

9. Gehäuse nach einem der Ansprüche 1 bis 8, wobei das Isolationsschichtmaterial und/oder das Abdeckstreifenmaterial mindestens ein Additiv zur Erhöhung der Wärmeleitfähigkeit umfasst.

10. Gehäuse nach einem der Ansprüche 1 bis 9, wobei das Grundgehäuse (1) Wandstärken von ≥100 pm aufweist.

## Claims

1. Housing for a galvanic cell (Z), in particular a lithium-ion cell, or for a battery module made up of a number of galvanic cells (Z) or for a battery pack of a number of battery modules comprising galvanic cells (Z), comprising
- a main housing (1) with an opening (0) for introducing the device(s) to be housed, for example a lithium-ion cell, into the main housing (1) and with at least one side wall (S) bounding the opening (0),
- a housing cover (2),
- at least one electrically insulating insulation layer (3), and
- at least one electrically insulating cover strip (4),
the opening (0) of the main housing (1) being closed by the housing cover (2),
the housing cover (2) being connected to the side wall (S) or side walls (S) of the main housing (1), the insulation layer (3) covering at least one of the outer surfaces (S, B) of the main housing (1) and/or of the housing cover (2),
at least the connecting region (5) between the housing cover (2) and the side wall or side walls (S) being covered by the cover strip (4), the housing cover (2) being connected to the side wall (S) or the side walls (S) of the main housing (1) by a weld seam (5) and the electrically insulating cover strip (4) covering the weld seam (5) and also the portions adjoining thereto of the insulation layer (3).

2. Housing according to Claim 1, the cover strip (4) also covering a portion of the housing cover (2) that is adjoining the connecting region, in particular the weld seam, (5) and a portion of the main housing (1) that is adjoining the connecting region, in particular the weld seam, (5).

3. Housing according to either of Claims 1 and 2, the cover strip (4) also covering a portion of the side wall insulation layers and/or housing cover insulation layers (3) that is adjacent to the connecting region, in particular the weld seam, (5).

4. Housing according to one of Claims 1 to 3,
the insulation layer (3) covering the outer surface of the main housing (1) and the outer surfaces of the housing cover (2) completely or substantially completely, or
one portion of the insulation layer (3) extensively covering the outer surfaces of the main housing (1) with the exception of a border strip (R) adjacent to the opening (0), another portion of the insulation layer (3) extensively covering the outer surfaces of the housing cover (2) with the exception of a border strip adjacent to the opening (0) of the main housing (1) in the closed state.

5. Housing according to Claim 4, the border strip (R) having a width (b), measured between the edge adjacent to the opening (0) and the insulation layer (3), of ≥ 0.1 mm to ≤ 20 mm, in particular of ≥ 1 mm to ≤ 10 mm, for example of ≥ 2 mm to ≤ 7 mm.

6. Housing according to one of Claims 1 to 5, the main housing having a bottom (B), at least one side wall (S) and an opening (0) arranged opposite from the bottom (B), in particular the outer surface of the side wall (S) or the outer surfaces of the side walls (S) being covered by portions of the insulation layer (3), in particular the portion of the insulation layer (3) that is covering the side wall (S) or the portions of the insulation layer (3) that are covering the side walls (S) being connected in a material-bonded manner to the portion of the insulation layer (3) that is covering the bottom (B).

7. Housing according to one of Claims 1 to 6, the cover strip being an adhesive strip or a shrink tube or a coating, in particular an adhesive strip.

8. Housing according to one of Claims 1 to 7, the at least one insulation layer (3) being formed from an elastomeric material, in particular a material based on silicone, polyurethane, polyester, polyester urethane, epoxy, acrylate or ethylenepropylene-diene rubber.

9. Housing according to one of Claims 1 to 8, the material of the insulation layer and/or the material of the cover strip comprising at least one additive for increasing the thermal conductivity.

10. Housing according to one of Claims 1 to 9, the main housing (1) having wall thicknesses of ≥ 100 pm.

## Revendications

1. Boîtier pour une cellule galvanique (Z), en particulier une cellule lithium-ion, ou pour un module de batterie composé de plusieurs cellules galvaniques (Z) ou pour des modules de batterie comprenant un ensemble de batterie composé de plusieurs cellules galvaniques (Z), comprenant
- un boîtier de base (1) avec un orifice (0) pour la mise en place du/des système(s) à loger, par exemple la cellule lithium-ion, dans le boîtier de base (1) et avec au moins une paroi latérale (S) limitant l'orifice (0),
- un couvercle de boîtier (2),
- au moins une couche d'isolation (3) électriquement isolante, et
- au moins une bande de recouvrement (4) électriquement isolante,
l'orifice (0) du boîtier de base (1) étant fermé avec le couvercle de boîtier (2),
le couvercle de boîtier (2) étant raccordé à la paroi latérale (S) ou respectivement aux parois latérales (S) du boîtier de base (1), la couche d'isolation (3) couvrant au moins une des surfaces extérieures (S, B) du boîtier de base (1) et/ou du couvercle de boîtier (2),
au moins la zone de raccordement (5) entre le couvercle de boîtier (2) et la paroi latérale (S) ou respectivement les parois latérales étant recouvertes par la bande de recouvrement (4), le couvercle de boîtier (2) étant raccordé à la paroi latérale (S) ou respectivement aux parois latérales (S) du boîtier de base (1) par un cordon de soudure (5), et la bande de recouvrement (4) électriquement isolante couvrant le cordon de soudure (5) ainsi que les tronçons de la couche d'isolation (3) qui lui sont adjacents.

2. Boîtier selon la revendication 1, la bande de recouvrement (4) recouvrant en outre un tronçon du couvercle de boîtier (2) adjacent à la zone de raccordement, en particulier au cordon de soudure (5), et un tronçon du boîtier de base (1) adjacent à la zone de raccordement, en particulier au cordon de soudure (5).

3. Boîtier selon l'une des revendications 1 à 2, la bande de recouvrement (4) recouvrant en outre un tronçon des couches d'isolation de parois latérales et/ou des couches d'isolation (3) de couvercle de boîtier voisin de la zone de raccordement, en particulier du cordon de soudure (5).

4. Boîtier selon l'une des revendications 1 à 3, la couche d'isolation (3) couvrant sur toute la surface, ou essentiellement sur toute la surface, la surface extérieure du boîtier de base (1) et les surfaces extérieures du couvercle de boîtier (2), ou un tronçon de la couche d'isolation (3) couvrant de façon étendue les surfaces extérieures du boîtier de base (1) à l'exception d'une bande de bord (R) voisine de l'orifice (0), un autre tronçon de la couche d'isolation (3) couvrant de façon étendue les surfaces extérieures du couvercle de boîtier (2) à l'exception d'une bande de bord qui, dans l'état fermé, est voisine de l'orifice (0) du boîtier de base (1).

5. Boîtier selon la revendication 4, la bande de bord (R), mesurée entre l'arête voisine de l'orifice (0) et la couche d'isolation (3), présentant une largeur (b) de ≥ 0,1 mm à ≤ 20 mm, en particulier de ≥ 1 mm à ≤ 10 mm, par exemple de ≥ 2 mm à ≤ 7 mm.

6. Boîtier selon l'une des revendications 1 à 5, le boîtier de base présentant un fond (B), au moins une paroi latérale (S) et un orifice (0) disposé à l'opposé du fond (B), en particulier la surface extérieure de la paroi latérale (S), ou respectivement les surfaces extérieures des parois latérales (S), étant couvertes par des tronçons de la couche d'isolation (3), en particulier le tronçon de la couche d'isolation (3) couvrant la paroi latérale (S), ou respectivement les tronçons de la couche d'isolation (3) couvrant les parois latérales (S), étant raccordés par liaison de matière au tronçon de la couche d'isolation (3) couvrant le fond (B).

7. Boîtier selon l'une des revendications 1 à 6, la bande de recouvrement étant un ruban adhésif ou une gaine thermorétractable ou une couche de peinture, en particulier un ruban adhésif.

8. Boîtier selon l'une des revendications 1 à 7, la couche d'isolation (3) au moins au nombre de un étant constituée d'un matériau élastomère, en particulier d'un matériau à base de silicone, de polyuréthane, de polyester, de polyester-polyuréthane, d'époxy, d'acrylate ou de caoutchouc éthylène-propylène-diène.

9. Boîtier selon l'une des revendications 1 à 8, le matériau de la couche d'isolation et/ou le matériau de la bande de recouvrement comprenant au moins un additif destiné à augmenter la conductibilité thermique.

10. Boîtier selon l'une des revendications 1 à 9, le boîtier de base (1) présentant des épaisseurs de paroi de ≥ 100 pm.
